# EUROPÄISCHE PATENTSCHRIFT

(11) **EP 3 706 510 B1**
(45) Veröffentlichungstag und Bekanntmachung des Hinweises auf die Patenterteilung: **29.04.2026**
(21) Anmeldenummer: 20160439.4
(22) Anmeldetag: 02.03.2020
(51) Int. Cl.: H05B 6/06, H05B 6/12

(54) **VERFAHREN ZUR ANSTEUERUNG EINER INDUKTIONSSPULE UND INDUKTIONSSPULENVORRICHTUNG**
METHOD OF CONTROLLING AN INDUCTION COIL AND INDUCTION COIL DEVICE
PROCÉDÉ DE COMMANDE D'UNE BOBINE D'INDUCTION ET DISPOSITIF DE BOBINE D'INDUCTION

(30) Priorität: 05.03.2019 DE 102019202991
(43) Veröffentlichungstag der Anmeldung: 09.09.2020
(73) Patentinhaber: E.G.O. Elektro-Gerätebau GmbH, 75038 Oberderdingen (DE)
(72) Erfinder: Egenter, Christian, 75015 Bretten (DE); Göbel, Robin, 76698 Ubstadt-Weiher (DE); Herweg, Elmar, 75038 Oberderdingen (DE)
(74) Vertreter: Patentanwälte Ruff, Wilhelm, Beier, Dauster & Partner mbB

(56) Entgegenhaltungen:
- EP-A1- 2 112 861
- EP-A1- 2 798 910
- EP-B1- 2 112 861
- EP-B1- 2 798 910
- JP-A- 2016 134 355
- US-A1- 2014 125 147
- US-A1- 2014 158 680

## Beschreibung

### ANWENDUNGSGEBIET UND STAND DER TECHNIK

Die Erfindung betrifft ein Verfahren zur Ansteuerung einer Induktionsspule, insbesondere an einem Induktionskochfeld, um eine Leistungserzeugung für eine Primärleistung an der Induktionsspule einstellen zu können. Ebenso betrifft die Erfindung eine Kombination einer Induktionsspulenvorrichtung mit einem elektrischen Verbraucher. Das Induktionskochfeld weist Ansteuermittel für die Leistungserzeugung auf, wobei die Induktionsspule mit einer in Serie geschalteten Kapazität einen primärseitigen Schwingkreis bildet. Die Ansteuermittel der Induktionsspule weisen mindestens zwei Stellgrößen auf, über die sie die erzeugte Primärleistung verändern, nämlich das Verändern einer Arbeitsfrequenz für den primärseitigen Schwingkreis als eine erste Stellgröße sowie das Verändern einer am primärseitigen Schwingkreis effektiv anliegenden Spannung als eine zweite Stellgröße.

Dabei kann die Induktionsspule eine Leistungsübertragung vornehmen an einen auf eine Abdeckung oberhalb der Induktionsspule aufgestellten elektrischen Verbraucher, der eine Empfängerspule und eine daran angeschlossene elektrische Last aufweist. Die Induktionsspule und die Empfängerspule sind dann transformatorisch gekoppelt derart, dass ein Strom in der Induktionsspule eine Spannung in der Empfängerspule induziert, die wiederum einen Stromfluss bewirkt, wodurch eine Sekundärleistung in der Last des elektrischen Verbrauchers erzeugt wird. Den Ansteuermitteln der Induktionsspule wird eine Information zu einer gewünschten Sekundärleistung an der Last des Verbrauchers vorgegeben, beispielsweise über einen Einstellknopf oben am elektrischen Verbraucher.

In Marktstudien der etwa letzten 10 Jahren wurden Lösungen für kabellose Geräte angedacht, die sozusagen einfach auf einem Esstisch oder auf eine Küchenarbeitsplatte, insbesondere ein Induktionskochfeld, aufgestellt und betrieben werden können. Durch den Wegfall eines Anschlusskabels erhält die Bedienperson eine deutlich erhöhte Flexibilität, weil der gleiche Platz sowohl zum Vorbereiten als auch zum Kochen von Essen sowie für den Betrieb unterschiedlichster, elektrischer Küchenhelfer bzw. -geräte genutzt werden kann, aber auch für die freie Nutzung jenseits der Essenzubereitung. Dieser Vorteil wird vor allem für sehr kleine Wohnungen mit kleinen Küchen oder Küchenzeilen erwartet.

Es wird gearbeitet an einem offenen Standard zur induktiven Versorgung von Küchengeräten, der neben obiger Anwendung im Tisch auch eine Energieversorgung auf speziellen Induktionskochfeldern durch deren Induktionsspule vorsieht, auf denen dann sowohl konventionelles Kochgeschirr als auch kabellose Küchengeräte betrieben werden können. Diese kabellosen Küchengeräte sind grundsätzlich neben einer Empfängerspule mit Steuerintelligenz versehen, da sich deren Bedienelemente im Gerät befinden, und mit diesen dann über eine Funkverbindung odgl. die Leistung angefordert werden kann. Ein Vorteil einer integrierten Funkverbindung ist es, dass sich das kabellose Küchengerät über Funk an der Kochstelle anmeldet und identifiziert wird, bevor die Leistungserzeugung dafür gestartet werden darf. Bei einem Anwendungsfall auf einer normalen Tischplatte darf also nur nach vorheriger Identifikation eine Leistungserzeugung starten, da dort konventionelle Kochtöpfe in keinem Fall geheizt werden dürfen wegen der Wärmeentwicklung an deren Unterseite und nur geeignete kabellose Geräte betrieben werden dürfen.

Wird ein Induktionskochfeld eingesetzt, um darin die Induktionsspule und ihre Ansteuermittel unterzubringen, dann sollen mit der jeweils gleichen Induktionsspule sowohl ein induktionsgeeigneter Kochtopf beheizt als auch ein kabelloses Gerät als elektrischer Verbraucher mit Leistung bzw. Energie versorgt werden können. In beiden Fällen sind die Induktionsspule und der Kochtopf bzw. die Empfängerspule transformatorisch gekoppelt, d.h. ein Strom in der Induktionsspule induziert eine Spannung in der Empfängerspule, die dort zum Fließen von Strom entsprechend einer Sekundärleistung in der Last des elektrischen Verbrauchers führt, welcher wiederum zu einer Gegenspannung in der Induktionsspule führt.

Problematisch sind Laständerungen bzw. Lastsprünge am elektrischen Verbraucher, wenn dieser also beispielsweise schlagartig ausgeschaltet wird oder verschoben wird bzgl. der Induktionsspule, beispielsweise um wenige cm oder aber ganz entfernt wird.

Aus der WO 2013/098227 A1 ist es bekannt, ein Küchengerät auf einem Induktionskochfeld zu betreiben, das induktiv von einer Induktionsheizspule des Induktionskochfeldes mit elektrischer Energie versorgt wird. Dabei weist das Küchengerät eine Empfängerspule und eine daran angeschlossene elektrische Last auf, wobei die Empfängerspule und die Induktionsheizspule transformatorisch gekoppelt sind. Um eine Leistungsübertragung einstellen zu können, kann eine Anzahl von Schwingkreiskondensatoren im aufgestellten Küchengerät variiert werden. Dadurch kann die Eigenschaft des Schwingkreises zusammen mit der Empfängerspule eingestellt werden. Das Erhöhen der Leistung erfolgt dabei genau spiegelbildlich zum Verringern der Leistung.

Aus der EP 2 112 861 A1 ist ein allgemeines Verfahren bekannt, wie auf einem Induktionskochfeld einerseits passive Kochgefäße, wie beispielsweise eine Pfanne, induktiv beheizt werden können. Andererseits können aktive Küchengeräte betrieben werden, wobei die Energieversorgung induktiv erfolgt. Ein solches Küchengerät kann beispielsweise ein Toaster sein.

Aus der US 2014/125147 A1 ist es bekannt, auf einem flächigen Untersatz an einer von mehreren an dem Untersatz vorgesehenen Ladestationen ein Mobiltelefon induktiv zu laden. Dazu ist pro Ladestation im Untersatz eine Primärspule in einem Schwingkreis angeordnet, die mit einer Empfängerspule in dem mobilen Gerät induktiv gekoppelt wird. Die angefragte elektrische Leistung wird für die Übertragung angepasst.

Aus der US 2014/158680 A1 ist ein nochmals weiteres induktives System zur Energieübertragung bekannt, insbesondere integriert in ein Induktionskochfeld. Über einer Induktionsheizspule des Induktionskochfelds kann ein Küchengerät aufgestellt werden, das ähnlich ausgebildet ist wie zuvor beschrieben. Es kann beispielsweise ein Küchenmixer sein. Die für den Betrieb des elektrischen Motors des Küchenmixers notwendige Energie wird induktiv von der Induktionsheizspule an eine Empfängerspule im Küchenmixer übertragen. Dabei kann eine Wechselspannung für den Motor noch gleichgerichtet werden.

Aus der JP 2016 134355 A ist ein nochmals weiteres Induktionskochfeld bekannt, das mehrere Induktionsheizspulen aufweist. Über einer von diesen kann ein Küchengerät auf eine Kochfeldplatte aufgestellt werden, das zu seinem Betrieb induktiv mit elektrischer Energie versorgt wird. Auch dort kann für einen elektrischen Verbraucher, beispielsweise einen Motor, eine Gleichrichtung vorgesehen sein.

### AUFGABE UND LÖSUNG

Der Erfindung liegt die Aufgabe zugrunde, ein eingangs genanntes Verfahren sowie eine zu dessen Durchführung geeignete Kombination einer Induktionsspulenvorrichtung mit einem elektrischen Verbraucher zu schaffen, mit denen Probleme des Standes der Technik gelöst werden können und es insbesondere möglich ist, einen über der Induktionsspule aufgestellten elektrischen Verbraucher mit Empfängerspule und daran angeschlossener elektrischer Last vorteilhaft zu betreiben, vorzugsweise auch bei schlagartiger Laständerung oder sehr schnellem Verschieben des Verbrauchers.

Gelöst wird diese Aufgabe durch ein Verfahren mit den Merkmalen des Anspruchs 1 sowie durch eine Kombination einer Induktionsspulenvorrichtung mit einem elektrischen Verbraucher mit den Merkmalen des Anspruchs 13. Vorteilhafte sowie bevorzugte Ausgestaltungen der Erfindung sind Gegenstand der weiteren Ansprüche und werden im Folgenden näher erläutert.

Dabei werden manche der Merkmale nur für das Verfahren oder nur für die Kombination einer Induktionsspulenvorrichtung mit einem elektrischen Verbraucher beschrieben. Sie sollen jedoch unabhängig davon sowohl für das Verfahren als auch für eine solche Kombination einer Induktionsspulenvorrichtung mit einem elektrischen Verbraucher selbständig und unabhängig voneinander gelten können. Der Wortlaut der Ansprüche wird durch ausdrückliche Bezugnahme zum Inhalt der Beschreibung gemacht.

Es ist vorgesehen, dass die Induktionsspule zur Leistungsübertragung an einen auf eine Abdeckung oberhalb der Induktionsspule aufgestellten elektrischen Verbraucher ausgebildet ist, der eine Empfängerspule und eine daran angeschlossene elektrische Last aufweist, wie er eingangs beschrieben ist. Die entsprechende Induktionsspulenvorrichtung ist vorteilhaft als Induktionskochfeld ausgebildet, an dem also auch gekocht werden können soll. Sie kann grundsätzlich aber auch in ein beliebiges geeignetes Möbel wie einen Tisch, einen Schrank oder eine Kommode eingebaut bzw. intergiert sein.

Es sind Ansteuermittel für die Leistungserzeugung vorgesehen, vorteilhaft mit Leistungsschaltern, beispielsweise Leistungshalbleiterschaltern. Die Induktionsspule bildet mit einer in Serie geschalteten Kapazität einen primärseitigen Schwingkreis, wie dies üblich ist. Der primäre Schwingkreis kann vorteilhaft von einer Halbbrücke oder einer Vollbrücke versorgt werden. Im Betrieb sind die Induktionsspule und die Empfängerspule transformatorisch gekoppelt derart, dass aufgrund der erzeugten Primärleistung ein Strom in der Induktionsspule eine Spannung in der Empfängerspule induziert. Diese Spannung wiederum bewirkt einen Stromfluss und somit eine Erzeugung der Sekundärleistung in der Last des elektrischen Verbrauchers, was wiederum zu einer Gegenspannung in der Induktionsspule führt. Hier ist vorteilhaft noch für die Induktionsspule eine Steuerung aufweist, die zur Durchführung des Verfahrens nach einem der vorhergehenden Ansprüche ausgebildet ist. Sie kann insbesondere mit den Ansteuermitteln verbunden sein oder diese, Informationen geben.

Den Ansteuermitteln der Induktionsspule wird eine Information zu einer gewünschten Sekundärleistung an der Last des Verbrauchers vorgegeben, wobei die Ansteuermittel der Induktionsspule mindestens zwei Stellgrößen aufweisen. Über diese beiden Stellgrößen können sie die erzeugte Primärleistung verändern. Eine erste Stellgröße ist das Verändern einer Arbeitsfrequenz für den primärseitigen Schwingkreis. Eine zweite Stellgröße ist das Verändern einer am primärseitigen Schwingkreis effektiv anliegenden Spannung. Die Ansteuermittel arbeiten mit einer Übertragungsfunktion P(f) für die Primärleistung, die zumindest einen lokalen Höhepunkt hat, unter Umständen auch nur einen einzigen Höhepunkt hat, in dessen Umgebung ein Betriebsverfahren vorteilhaft abläuft. Bei guter Kopplung kann die Übertragungsfunktion nämlich zwei Höhepunkte mit einem Tiefpunkt dazwischen aufweisen. Von dem vorgenannten zumindest einen lokalen Höhepunkt aus flacht die Funktion bzw. deren Kurve zu beiden Seiten hin ab. Bei dieser Übertragungsfunktion P(f) führt rechts von diesem zumindest einen lokalen Höhepunkt ein Verringern der Arbeitsfrequenz zu einer höheren Primärleistung, und ein Erhöhen der Arbeitsfrequenz führt zu einer geringeren Primärleistung. Dann befindet man sich im sogenannten induktiven Arbeitsbereich. Links von diesem zumindest einen lokalen Höhepunkt führt ein Verringern der Arbeitsfrequenz zu einer geringeren Primärleistung, und ein Erhöhen der Arbeitsfrequenz führt zu einer höheren Primärleistung. Dann befindet man sich im sogenannten kapazitiven Arbeitsbereich. Vorzugsweise wird für den Betrieb der Induktionsspule eine Arbeitsfrequenz verwendet, die über der Arbeitsfrequenz an diesem lokalen Höhepunkt der Übertragungsfunktion liegt, so dass die Induktionsspule im induktiven Arbeitsbereich arbeitet. Eine erste Ableitung der Übertragungsfunktion ist hier negativ, da sie hier abfällt. Der lokale Höhepunkt liegt vorteilhaft in einem Bereich der Arbeitsfrequenz zwischen 15 kHz und 50 kHz, besonders vorteilhaft zwischen 20 kHz und 36 kHz, und in diesem Bereich ist es der einzige Höhepunkt der Übertragungsfunktion P(f) für die Primärleistung.

Ein Verschieben des Topfes bei konstanter Arbeitsfrequenz verändert die Kopplung zwischen Induktionsspule und Empfängerspule und kann dazu führen, dass man nicht mehr im bevorzugten induktiven Arbeitsbereich sondern im kapazitiven Arbeitsbereich der Übertragungsfunktion arbeitet. Dann kann versucht werden, wieder in den bevorzugten induktiven Arbeitsbereich zu steuern.

Erfindungsgemäß versuchen die Ansteuermittel in einem ersten Betriebsmodus immer, die gewünschte Sekundärleistung mit maximaler Aussteuerung der am primärseitigen Schwingkreis effektiv anliegenden Spannung, die die vorgenannte zweite Stellgröße bildet, stationär einzuregeln. Dies gilt in den folgenden Fällen:
∘ bei Änderung der gewünschten Sekundärleistung oder
∘ bei Abweichung zwischen einer gemessenen Sekundärleistung und der gewünschten Sekundärleistung. Dies kann verursacht sein durch eine Änderung der transformatorischen Kopplung zwischen Induktionsspule und Empfängerspule und/oder durch eine Änderung der elektrischen Last, was durch integrierte Schaltmittel im Verbraucher hervorgerufen sein kann.

Zum Erhöhen der Primärleistung, insbesondere weil eine höhere Sekundärleistung gefordert ist entsprechend einem der beiden vorgenannten Fälle, verringern die Ansteuermittel die Arbeitsfrequenz als erste Stellgröße.

Zum Verringern der Primärleistung, insbesondere weil eine geringere Sekundärleistung gefordert ist entsprechend einem der beiden vorgenannten Fälle, verringern die Ansteuermittel in einem ersten Schritt die am primärseitigen Schwingkreis effektiv anliegende Spannung als zweite Stellgröße. Dann wird in einem zweiten nachgelagerten Schritt die Arbeitsfrequenz als erste Stellgröße erhöht. Gegebenenfalls müssen die beiden Schritte mehrfach wiederholt werden, um den Strom bzw. die Leistung in einem gewünschten Arbeitsbereich zu halten. So kann man wieder auf einen Arbeitspunkt auf einer Kurve einer Übertragungsfunktion P(f) kommen, nur eben auf einer anderen Kurve, wie sie den neuen physikalischen Bedingungen entspricht. Insbesondere bei Änderung der transformatorischen Kopplung zwischen Induktionsspule und Empfängerspule aufgrund eines Verschiebens ergibt sich offensichtlich eine neue Kurve.

Vorteilhaft sind Induktionsspule und Empfängerspule "interoperable" bzw. aufeinander abgestimmt, wie es das Ziel des vorgenannten offenen Standards ist. Dies bedeutet, dass die Induktionsspule und die Empfängerspule bezüglich Durchmesser und Induktivität zum bevorzugten Anwendungsfall in einem Induktionskochfeld bzw. einem Einbau in ein Möbel, beispielsweise einen Tisch oder eine Kommode, bzgl. der Leistungsklasse aufeinander abgestimmt sind. So können die jeweils definierten Leistungen bei der Leistungsübertragung übertragen werden.

In Ausgestaltung des Verfahrens können in dem Fall, dass der Verbraucher verschoben wird relativ zur Induktionsspule und dadurch in kurzer Zeit, vorzugsweise in weniger als 0,5 sec oder sogar in weniger als 0,2 sec, die transformatorische Kopplung geringer und der primärseitige Schwingkreis entdämpft werden, die Ansteuermittel in einem ersten Schritt bei gleichbleibender Arbeitsfrequenz den primärseitigen Strom mit einer Schwankungsbreite von +-5 % in etwa konstant halten auf einem Ausgangsniveau des primärseitigen Stroms von I_1 vor einem Verschieben des Verbrauchers. Hierfür wird von den Ansteuermitteln die am primärseitigen Schwingkreis effektiv anliegende Spannung als zweite Stellgröße reduziert. So wird eine Primärleistung erzeugt, die einer Sekundärleistung entspricht, die geringer ist als die gewünschte Sekundärleistung. Der resultierende Arbeitspunkt ist robust gegen die unterschiedlichen, möglichen Ursachen einer Entdämpfung, insbesondere wenn eine Änderung zu ihm hin derart ist, dass der sich ergebende Arbeitspunkt im vorgenannten kapazitiven Arbeitsbereich der Übertragungsfunktion liegen sollte, in dem ein Reduzieren der Frequenz zu einem derartigen Anstieg des Stroms führt, welcher sogar einen Umrichter zerstören kann. Nachteil dieses ersten Schrittes ist, dass der resultierende Arbeitspunkt in der Regel erhöhte Verluste aufweist. Bei höherer Arbeitsfrequenz mit maximaler Effektivspannung an der Induktionsspule wären die Verluste geringer, d.h. der Wirkungsgrad wäre höher. Daher soll in nachgelagerten Schritten zu einem solchen Arbeitspunkt mit geringeren Verlusten übergegangen werden.

In einem zweiten Schritt wird die Arbeitsfrequenz als erste Stellgröße so lange erhöht, bis sich der Strom in der Induktionsspule um maximal +-10 % verändert hat oder bis die Primärleistung um maximal +-10 % von dem Wert für die Primärleistung abweicht, bei der die tatsächliche Sekundärleistung der gewünschten Sekundärleistung entspricht. Ein Messen der Sekundärleistung, um zu sehen, ob an der Last die gewünschte Sekundärleistung anliegt, die der Verbraucher von der Induktionsspule angefordert hat, würde zu lange für den Regelvorgang dauern, macht technisch also keinen Sinn. Anschließend wird wieder die am primärseitigen Schwingkreis effektiv anliegende Spannung als zweite Stellgröße so verändert, dass der primärseitige Strom wieder sein Ausgangsniveau von I_1 vor einem Verschieben des Verbrauchers oder einer Änderung der gewünschten Sekundärleistung bzw. Laständerung erreicht hat oder bis sich die gewünschte Sekundärleistung an der Last eingestellt hat.

Dann werden der erste vorgenannte Schritt und der zweite vorgenannte Schritt so lange abwechselnd durchgeführt, bis die an der Last gemessene Sekundärleistung kleiner oder gleich der gewünschten Sekundärleistung ist, oder bis die maximal mögliche am primärseitigen Schwingkreis effektiv anliegende Spannung als zweite Stellgröße erreicht ist. Im letzteren Fall kann eben keine höhere Sekundärleistung bewirkt werden, die Last muss dann mit geringerer Sekundärleistung betrieben werden.

In vorteilhafter Ausgestaltung der Erfindung ist im vorgenannten zweiten Schritt beim Erhöhen der Arbeitsfrequenz als erste Stellgröße die Schwelle für eine Änderung des Stroms in der Induktionsspule und/oder die Schwelle für eine Änderung der Primärleistung nach oben, also als Erhöhen, kleiner als für eine Änderung nach unten, also als Verringern. So kann dies bevorzugt um maximal +5 % nach oben und um maximal -10 % nach unten sein, besonders bevorzugt um maximal +2 % nach oben und um maximal -5 % nach unten. Damit ist ein Verringern stärker möglich als ein Erhöhen, was erkennbar hilft, die Schaltungsbauteile zu schonen.

Eine Information zu einer gewünschten Sekundärleistung an der Last des Verbrauchers wird vorteilhaft den Ansteuermitteln vorgegeben, besonders vorteilhaft sendet der elektrische Verbraucher den Vorgabewert für die Leistungserzeugung an die Leistungserzeugung. Dazu kann er neben einem Sender und einer Ansteuerung bzw. einer gewissen Intelligenz auch eine Bedieneinrichtung aufweisen, an der eine Bedienperson den Betrieb des Verbrauchers und somit der Last einstellen kann. So kann der Verbraucher beispielsweise ein Mixer sein, der mit unterschiedlichen Geschwindigkeitsstufen arbeiten kann. Somit gibt es einen variierenden Leistungsbedarf an einem Elektromotor des Mixers, je nach dem, welche Stufe die Bedienperson an der Bedieneinrichtung einstellt, beispielsweise mittels eines Knopfes oder Drehschalters. Diese eingestellte Geschwindigkeitsstufe wertet die Ansteuerung aus und berechnet daraus eine gewünschte Sekundärleistung, die der Motor bzw. der Verbraucher, ggf. zusätzlich zu einer Leistung für den Grundbedarf der Bedieneinrichtung, benötigen. Diese gewünschte Sekundärleistung sendet der Verbraucher dann an die Ansteuermittel der Induktionsspule, beispielsweise in einem Induktionskochfeld mit entsprechendem Empfänger.

Die gewünschte Sekundärleistung kann einerseits ein Absolutwert sein, beispielsweise "1500 W". So kann ein Verbraucher ohne integrierte Messung der Sekundärleistung eine gewünschte Leistung vorgeben, die dem gewünschten Arbeitspunkt erfahrungsgemäß entspricht. Falls der Verbraucher keine Einrichtung zur Messung der Sekundärleistung an der Last aufweist, kann andererseits der Empfänger eine Abweichung der gemessenen Sekundärleistung zu der gewünschten Sekundärleistung an die Ansteuermittel der Induktionsspule schicken, da Primärleistung und Sekundärleistung um die Verluste bei der Übertragung voneinander abweichen, wobei dieser Wirkungsgrad variieren kann. Die Induktionsspule kann nur gegen eigene Werte regeln, so dass die Vorgabe der Sekundärleistung zur Ermittlung einer gewünschten Primärleistung dient. Mit dieser Primärleistung wird die Induktionsspule dann betrieben.

Ein Verändern der am primärseitigen Schwingkreis effektiv anliegenden Spannung als zweite Stellgröße erfolgt bevorzugt durch Ändern des Verhältnisses der Einschaltdauer zur Ausschaltdauer der Schaltmittel bei einer Halbbrücke in der Leistungsansteuerung, was auch als Tastverhältnis bekannt ist. Wird eine Vollbrücke, die gemeinsam aus zwei Halbbrücken gebildet wird, in der Leistungsansteuerung vorgesehen, so wird der Phasenwinkel zwischen den Ansteuersignalen der beiden Halbbrücken geändert, was im Ergebnis bzgl. des Veränderns der effektiv anliegenden Spannung dem vorher beschriebenen entspricht.

Ein vorteilhaftes Tastverhältnis von 50% entspricht bei einer über DC gesteuerten Halbbrücke dem Arbeitspunkt mit dem Maximum der effektiven Spannung bei einer vorgegebenen Arbeitsfrequenz. Es gibt aber eben auch alternative Steuerverfahren, wobei das Tastverhältnis von 50% einem Phasenwinkel von 180° bei einer Vollbrücke entspricht. Bei einem Reduzieren des Tastverhältnisses bleibt vorzugsweise die Arbeitsfrequenz konstant.

Vorteilhaft kann die Leistungsübertragung auf Dauer bei maximal möglicher am primärseitigen Schwingkreis effektiv anliegender Spannung als zweite Stellgröße erfolgen. Bei der sich dabei einstellenden Arbeitsfrequenz liegt eine Effektivspannung an der Induktionsspule an, die maximal groß ist.

Es kann vorgesehen sein, dass das Ändern der Arbeitsfrequenz, insbesondere zum Ändern der Primärleistung, jeweils gestoppt wird, sobald eine sich dabei ergebende Änderung der Primärleistung eine Schwelle von +/-10 % erreicht. Dabei können die vorgenannten Schwellwerte gelten, die vorzugsweise nach oben kleiner sind als nach unten. Die können auch +5 % und -10 % betragen, insbesondere +2 % und -5 %.

Bevorzugt kann ein dauerhafter Betrieb der Induktionsspule zur Versorgung des elektrischen Verbrauchers mit einer Arbeitsfrequenz erfolgen, die größer ist als eine Arbeitsfrequenz, bei der die Kurve der Übertragungsfunktion P(f) ihren vorgenannten zumindest lokalen Höhepunkt der maximalen Primärleistung hat, bzw. bei der die Kurve der Übertragungsfunktion P(f) eine negative erste Ableitung aufweist, also abfällt. Dann befindet man sich, wie zuvor genannt, im sogenannten induktiven Bereich der Übertragungsfunktion P(f). Hier können die Verluste geringer gehalten werden.

Bei einem Verfahren nach dem Oberbegriff des Anspruchs erfolgt eine dynamische Begrenzung des Stroms durch die Induktionsspule zum Schutz der Vorrichtung, aber auch des Verbrauchers, wobei eine Begrenzung bei +10 %, insbesondere bei +5 %, des aktuellen Stromwerts liegt. Die dynamische Begrenzung begrenzt den Strom und damit das Magnetfeld, welches als Stromquelle im Verbraucher diesen beschädigen oder sogar zerstören kann. Zum Schutz der primärseitigen Vorrichtung ist es ausreichend, den Strom dort auf einen Absolutwert zu begrenzen, bei dem dieser sicher nicht zerstört wird. Diese Begrenzung darf für eine Dauer von maximal 1 sec nicht überschritten werden, vorzugsweise maximal 0,1 sec oder sogar nur maximal 0,02 sec. Andernfalls wird die Leistungserzeugung an der Induktionsspule abgeschaltet oder der Strom wird auf einen Wert mindestens 25 % oder sogar 50 % unterhalb des aktuellen Stromwerts reduziert, wobei zur Reduzierung des Stroms die am primärseitigen Schwingkreis effektiv anliegende Spannung als zweite Stellgröße reduziert wird.

Die vorgenannte Begrenzung kann regelmäßig nachgeführt werden, vorzugsweise alle 8 msec bis 500 msec. Insbesondere wird sie alle 16,6 msec bis 20 msec nachgeführt, so dass jede zweite Halbwelle überprüft werden kann. Dies kann dazu dienen, bei Übergangsvorgängen zwischen Arbeitspunkten permanent einen Schutz gegen Lastsprünge, insbesondere Lastabwürfe, des aufgestellten Verbrauchers zu haben.

Vorteilhaft kann der Strom durch die Induktionsspule über Komparatoren gemessen werden, die direkt auf einen Treiber für Leistungshalbleiter als Ansteuermittel für die Induktionsspule einwirken. So wird eine möglichst wenig fehleranfällige Ausgestaltung erreicht.

In Ausgestaltung der Erfindung kann bei einer Leistungserzeugung mit einer Halbbrücken-Schaltung für die Induktionsspule eine Stromspitze als Strom gemessen werden, welche durch genau einen Leistungsschalter der Halbbrücken-Schaltung erzeugt wird. Dabei besitzt dieser Leistungsschalter die kürzere Ein-Dauer im Vergleich zu dem anderen Leistungsschalter.

Bevorzugt werden mehrere Induktionsspulen in einem Induktionskochfeld als mögliche Induktionsspulenvorrichtung mit diesem Verfahren angesteuert, besonders bevorzugt in einer speziellen Betriebsart für aufgesetzte Verbraucher mit elektrischer Last. Diese Induktionsspulen können dann immer noch in einer anderen normalen Betriebsart zum üblichen induktiven Beheizen von Töpfen dienen. Eine Arbeitsfrequenz zum Erhöhen der Primärleistung einer der Induktionsspulen wird dabei nicht kontinuierlich reduziert, sondern sie wird in Schritten bzw. Stufen reduziert. Vorzugsweise erfolgt eine Synchronisierung der Änderung der Arbeitsfrequenz einer Induktionsspule gemeinsam mit denjenigen anderer Induktionsspulen, die gerade betrieben werden.

Es geht bei der vorliegenden Erfindung im Besonderen in einem ersten Fall um das Handhaben einer Änderung der gewünschten Sekundärleistung eines aufgestellten Verbrauchers, insbesondere auch im Fall starker Änderung des Leistungsbedarfs. Ebenso geht es um eine Änderung der transformatorischen Kopplung zwischen Induktionsspule und Empfängerspule, beispielsweise beim Verschieben. Die transformatorische bzw. magnetische Kopplung zwischen Induktionsspule und Empfängerspule wird kleiner, wenn die Empfängerspule nicht zentrisch über der Induktionsspule platziert ist. Auch bei verschobener Empfängerspule ist es zwar möglich, die maximal vorgesehene Leistung zu übertragen, sofern in Induktionsspule und Empfängerspule die zulässigen Ströme und Spannungen nicht überschritten werden. Bei Verringerung der Kopplung wird zumeist mehr Strom in der Induktionsspule zum Übertragen bzw. Induzieren der gleichen Sekundärleistung benötigt, wobei Strom und Leistung aber besonders stark von der Arbeitsfrequenz f der Induktionsspule abhängen, da sich mit der Frequenz auch die Impedanz der Gesamtanordnung stark ändert. Wird eine Empfängerspule von der Induktionsspule heruntergeschoben, wodurch die Kopplung kleiner wird, dann verschiebt sich der Punkt, bei dem die maximale Leistung übertragen wird, zu einer höheren Arbeitsfrequenz. Dieser Punkt der maximalen Leistungsübertragung entspricht einem Resonanzpunkt mit zumindest einem lokalen Minimum der Impedanz. Durch die kleinere Impedanz bei konstanter Arbeitsfrequenz erhöhen sich der Strom I in der Induktionsspule sowie die Spannung U_Last in der Empfangsspule. Wird nun die Arbeitsfrequenz von der Leistungserzeugung für die Induktionsspule erhöht, dann besteht die Gefahr, dass der Strom in der Induktionsspule bzw. die Spannung in der Empfangsspule ansteigen, sofern die Leistungserzeugung die Arbeitsfrequenz nicht schneller erhöhen kann als die Kopplung kleiner wird bzw. als der Verbraucher verschoben wird. Werden dadurch Grenzen in der Empfängerspule und der Induktionsspule überschritten, so kann dies zu Beschädigungen bis hin zu einem Ausfall von Induktionsspule und/oder Empfängerspule bzw. deren jeweiliger Ansteuerung führen. Diese Gefahr ist besonders groß, wenn der Arbeitspunkt durch die kleinere Kopplung von dem vorgenannten bevorzugten induktiven Bereich der Übertragungsfunktion, bei dem ein Erhöhen der Frequenz zu höherer Impedanz führt, d.h. Strom bzw. Spannung werden dadurch reduziert, in einen kapazitiven Bereich der Übertragungsfunktion überwechselt, bei dem ein Erhöhen der Frequenz zu kleinerer Impedanz führt, d.h. Strom- bzw. Spannung erhöhen sich mit Frequenzanstieg. Daher ist es nachteilig, wenn zum Begrenzen des Stroms in der Induktionsspule bzw. der Spannung in der Empfängerspule die Arbeitsfrequenz erhöht wird.

Vorteilhaft wird bei einer Leistungserzeugung für die Induktionsspule mit Halbbrücke das Tastverhältnis bzw. der DutyCycle entsprechend einem Ein-Verhältnis des Leistungschalters mit der kürzeren Ein-Dauer bezogen auf eine gesamte Zyklusdauer reduziert bzw. bei einer Leistungserzeugung für die Induktionsspule mit Vollbrücke der Phasenwinkel zwischen einer Ansteuerung der beiden Brücken reduziert. Anderseits verursacht ein Betriebspunkt mit maximalem Tastverhältnis bzw. DutyCycle von nahe 50 % bzw. ein Betrieb mit 180° Phasenwinkel die geringsten Verluste in einem Umrichter der Leistungserzeugung, so dass eine Frequenzregelung zu einem höheren Wirkungsgrad bzw. höherer Effizienz führt.

In einem zweiten Fall geht es bei der vorliegenden Erfindung im Besonderen um das Handhaben eines weiteren, spezifischen Risikos, wenn nämlich der Verbraucher Mittel aufweist, welche seine Last von der Empfängerspule trennen können, da der Verbraucher zerstört werden könnte, wenn er auf eine konventionelle Induktionskochzone gestellt wird, deren Topferkennung den Verbraucher nicht von einem gewöhnlichen, induktionsgeeignetem Topf unterscheiden kann. Vorteilhaft sind diese Mittel Relais. Wegen der fehlenden Kommunikation vom Verbraucher zur konventionellen Induktionskochzone, also in diesem Fall zum Induktionskochfeld, kann dieses bei Betrieb der entsprechenden Induktionsspule die zulässigen Grenzen des Verbrauchers überschreiten und diesen beschädigen oder gar zerstören, ggf. sogar einen Brand verursachen. Es ist auch denkbar, dass ein Verbraucher mehrere Lasten, beispielsweise einen oder mehrere einzeln abschaltbare Heizwiderstände sowie motorbasierte Lasten wie Lüfter oder Rührer besitzt. Diese müssen einzeln betrieben werden können.

Normalerweise sollte über ein im System integrierte Kommunikationseinrichtung, vorteilhaft mittels Funk, der Verbraucher zuerst veranlassen, dass die Induktionsspule die übertragene Leistung abschaltet oder zumindest auf ein für ihn unkritisches Niveau reduziert, bevor er eine Last trennt bzw. abschaltet. Tritt ein Lastsprung im laufenden Betrieb auf, so ändert sich die Impedanz sprunghaft, was in den meisten Fällen zu einem sprunghaften Anstieg des Stroms in der Induktionsspule und in Folge auch der Spannung U_Last in der Empfängerspule führt. Die Induktionsspule kann sich selbst durch ein Begrenzen des Strom auf seinen maximal zulässigen Wert vor der Zerstörung schützen, sofern eine ausreichend schnelle Erkennung des Lastsprungs sowie eine Reduziereinrichtung vorgesehen ist. Vorteilhaft kann dazu die Induktionsspule den DutyCycle im DC-Regler bzw. den Phasenwinkel reduzieren. Solange primärseitig ein Strom in der Induktionsspule fließt, wirkt dieser wie eine Stromquelle für den Verbraucher, d.h. auch wenn die Heizkreise vermeintlich abgeschaltet wurden, wird Strom im Verbraucher solange fließen, wie er irgendeinen Weg findet, wobei er dabei den Verbraucher beschädigen kann.

Es ist möglich, den Betrieb der Induktionsspule vorzugsweise mit der höchstmöglichen Arbeitsfrequenz eines Umrichters in der Leistungserzeugung zu beginnen, da dort zumeist mit einer größeren Impedanz gerechnet werden kann, strombegrenzend wirken kann. Da derartige Verbraucher wie ein vorgenannter Mixer oder auch Toaster, Küchenmaschinen odgl. sowohl primärseitig als auch sekundärseitig Resonanzkreise aufweisen, kann es im Besonderen bei stark gekoppelten Systemen zum Auftreten von zwei lokalen Resonanzpunkten kommen. Einer davon kann auch bei der höchsten Arbeitsfrequenz des Umrichters liegen. Daher sollte der Betrieb der Induktionsspule immer auch mit kleinstmöglichem DutyCycle bzw. Phasenwinkel gestartet werden.

Sollen relativ gesehen kleinere Leistungen von beispielsweise 2 W bis 200 W an den Verbraucher übertragen werden, beispielsweise wenn nur dessen Bedieneinrichtung oder Schaltmittel für Heizkreise im Verbraucher eingeschaltet und betrieben werden sollen, dann ist das zumeist weniger Leistung, als mit höchster Arbeitsfrequenz und kleinstem zulässigen DutyCycle bzw. Tastverhältnis bei einer Halbbrücke in der Leistungserzeugung übertragen werden kann. Der Phasenwinkel bei einer Vollbrücke in der Leistungserzeugung lässt sich theoretisch nahezu auf Null reduzieren, womit auch kleinste Leistungen realisiert werden können. Das übliche Verfahren von Induktionskochfeldern mittels der Ein-Dauer von Netzhalbwellen in einem kurzen Zyklus von zumeist 1 bis 10 sec ist hier dann für die Leistungsübertragung ungeeignet, weil dies sowohl zu Lücken der Versorgung des Verbrauchers als auch bereits zu unzulässigen Spitzen im Verbraucher führen kann. Daher wird dieser Betriebsfall entweder durch ein Anschneiden jeder Netzhalbwelle, vorzugsweise symmetrisch im auf- und absteigenden Teil der Netzhalbwelle, realisiert. Ein Phasenanschnitt ist hier erlaubt, weil die maximale kurzzeitige Leistung dank geeigneter Wahl von hoher Arbeitsfrequenz und kleinem Tastverhältnis bereits stark leistungsbegrenzend wirkt. Alternativ kann die HF-Ansteuerung im Pulsfrequenzmodus betrieben werden, bei der die HF-Ein-Dauer entsprechend einem Puls von einem oder beiden Schaltern der Halbbrücke konstant auf dem kleinsten erlaubten Wert gehalten wird. Dies entspricht einem Mindest-Tastverhältnis bei höchster Arbeitsfrequenz. Gleichzeitig wird dann die Arbeitsfrequenz reduziert, d.h. die Schwingung wird seltener durchgeführt. Ein vergleichbares Ergebnis kann man erhalten, wenn man einen bei Induktionskochfeldern üblichen Topferkennungspuls mit geeigneter Frequenz aktiviert. Wird dafür die Leistung gemäß einem der beschriebenen Verfahren angeschnitten, so müssen die resultierenden Lücken beim Berechnen der effektiven Leistung bewertet und herausgerechnet werden, um große Toleranzen der Leistungsregelung zu vermeiden.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine schematische Darstellung einer erfindungsgemäßen Kombination einer Induktionsspulenvorrichtung mit einem aufgestellten Mixer als elektrischem Verbraucher,
- Fig. 2 bis 4: verschiedene Flussdiagramme für eine Leistungserzeugung der Induktionsspule und
- Fig. 5: eine Übertragungsfunktion der Leistung in Abhängigkeit von der Frequenz P(f) mit eingezeichneter Regelung.

### DETAILLIERTE BESCHREIBUNG DER AUSFÜHRUNGSBEISPIELE

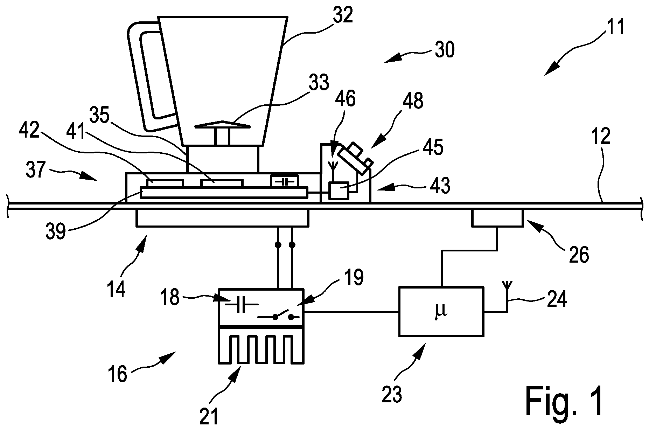

In der Fig. 1 ist eine erfindungsgemäße Induktionsspulenvorrichtung als Induktionskochfeld 11 dargestellt mit einer Kochfeldplatte 12 und einer Induktionsspule 14 an deren Unterseite. Für die Induktionsspule 14 ist eine an sich übliche Leistungserzeugung 16 vorgesehen, wie sie auch in normalen Induktionskochfeldern gemäß dem Stand der Technik eingebaut sind, nämlich mit einem Umrichter. Die Leistungserzeugung 16 weist eine erste primärseitige Schwingkreiskapazität 18 auf sowie Leistungsschalter 19, die als Halbbrücke oder als Vollbrücke ausgebildet sein können. Ein Kühlkörper 21 ist auch vorgesehen. Die Leistungserzeugung 16 kann mehrere Induktionsspulen des Induktionskochfelds 11 versorgen bzw. ansteuern, die hier nicht dargestellt sind.

Eine Steuerung 23 des Induktionskochfelds 11 steuert die Leistungserzeugung 16 an. Sie weist eine Antenne 24 auf um Informationen per Funk zu erhalten und auch ggf. zu senden. Die Steuerung 23 ist mit einer Anzeige-Bedieneinrichtung 26 verbunden, die auch wie üblich ausgebildet sein kann. Sie weist vorteilhaft Anzeigeelemente auf, bevorzugt als LED, und Bedienelemente, bevorzugt als Berührungsschalter. Es kann auch eine Kombination als Touchscreen vorgesehen sein. Damit kann das Induktionskochfeld mit seinen konventionellen Funktionen wie üblich bedient werden. Des Weiteren kann damit auch ein Teil der Erfindung angewandt werden.

Auf der Kochfeldplatte 12 über der Induktionsspule 14 ist ein elektrischer Verbraucher 30 als Mixer aufgestellt. Der Mixer weist ein Mixergefäß 32 mit einem Rührmesser 33 darin auf sowie einen Elektromotor 35 zu dessen Antrieb. In einem Gehäuse 37 sind die wichtigen Baueinheiten bzgl. der Leistungsversorgung enthalten, nämlich eine Empfängerspule 39 samt Schaltmitteln 41 dafür. Die Empfängerspule 39 ist mit der Induktionsspule 14 transformatorisch gekoppelt wie eingangs erläutert, was hier gut erkennbar und vorstellbar ist. Ein der erzeugten Primärleistung entsprechender Strom in der Induktionsspule 14 induziert transformatorisch eine Spannung in der Empfängerspule 39, die einen Stromfluss und somit eine Erzeugung der Sekundärleistung in der Last des elektrischen Verbrauchers 30 bewirkt, nämlich im Elektromotor 35. Die Schaltmittel 41 sind vorteilhaft als Sicherung odgl. ausgebildet und nicht als klassische Schalter zur Regelung des Elektromotors 35. Dies erfolgt über eine Steuerung der Leistungsversorgung durch die Induktionsspule 14. Eine Sicherung ist nur für Notfälle vorgesehen, beispielsweise entsprechend einer Schmelzsicherung. Auch eine Leistungsmessung 42 ist vorgesehen, die erfassen kann, wieviel Leistung genau bei der Empfängerspule 39 oder alternativ beim Elektromotor 35 ankommt. Die Leistungsmessung 42 ist ausgebildet wie aus dem Stand der Technik bekannt.

Das Gehäuse 39 ist rechts mit einem Bedienteil 43 versehen, das eine Steuerung 45 samt Antenne 46 und Bedienelementen 48 aufweist, vorteilhaft auch eine Anzeige für eine Bedienperson. Die Steuerung 45 und die Steuerung 23 können mittels der Antennen 46 und 24 miteinander kommunizieren bzw. Informationen austauschen, insbesondere kann die Steuerung 45 eine gewünschte Leistung als gewünschte Sekundärleistung, die eine Bedienperson an den Bedienelementen 48 eingegeben hat, an die Steuerung 23 senden.

Beim erfindungsgemäßen Verfahren kann eine Bedienperson beispielsweise eine Leistungsstufe 3 als hohe Leistung für den Mixer mittels der Bedienelemente 48 eingeben, was als gewünschte Sekundärleistung gilt und demzufolge an die Steuerung 23 gesendet wird. Dazu kann allgemein im Bedienteil 43 eine Energieversorgung in Form eines Akkumulators vorgesehen sein. Die Steuerung 23 setzt nun mittels der Leistungserzeugung 16 die gewünschte Sekundärleistung um in eine zu erzeugende Primärleistung, beispielsweise aufgrund von Erfahrungswerten oder berechnet. Die Induktionsspule 14 wird also mit einer bestimmten Primärleistung betrieben, die an sich zu der gewünschten Sekundärleistung führen sollte, zumindest ungefähr, und überträgt Leistung transformatorisch an die Empfängerspule 39. Diese übertragene Leistung wird zum Betrieb des Bedienteils 43 und vor allem zum größten Teil zum Betrieb des Antriebsmotors 35 verwendet um den Mixer anzutreiben. Die empfangene Sekundärleistung wird mittels der Leistungsmessung 42 gemessen, und wenn sie noch nicht der gewünschten Sekundärleistung gemäß der eingestellten Leistungsstufe 3 entspricht, weil sie zu niedrig ist, sendet die Steuerung 45 eine Information an die Steuerung 23, dass mehr Primärleistung erzeugt werden muss. Hier kann auch die eingangs genannte magnetische Kopplung zwischen Induktionsspule 14 und Empfängerspule 39 eine Rolle spielen, da diese die Leistungsübertragung verschlechtert wenn sie nicht optimal ist, vor allem weil Induktionsspule 14 und Empfängerspule 39 nicht exakt konzentrisch sind odgl..

Anhand der gesendeten Information vom Verbraucher 30 ändert die Steuerung mittels der Leistungserzeugung 16 solange die erzeugte Primärleistung bis die Information kommt, dass die tatsächliche Sekundärleistung der gewünschten Sekundärleistung entspricht. Dann wird diese Primärleistung weiterhin erzeugt, und der Verbraucher bzw. der Mixer 30 arbeitet damit.

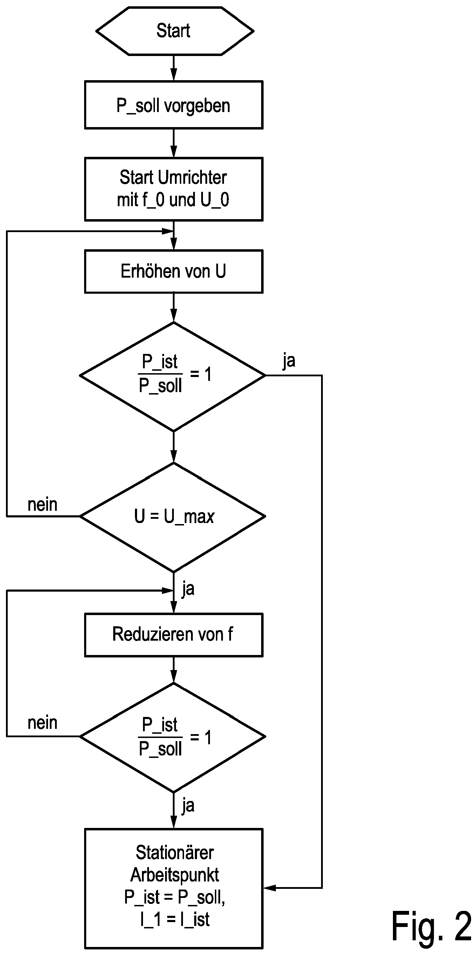

Dieses erste Einregeln beim Start des Verbrauchers 30 ist in dem Flussdiagramm der Fig. 2 dargestellt. P_soll entspricht dabei der gewünschten Sekundärleistung, die im Dauerbetrieb am Mixer vorliegen soll. Die Leistungserzeugung 16 mit dem Umrichter startet mit einer Anfangsfrequenz f_0 und einer anfänglichen am Primärkreis der Induktionsspule 14 effektiv anliegenden Spannung U_0. Diese sind vorteilhaft so gewählt, dass die tatsächliche Sekundärleistung sehr wahrscheinlich unter der gewünschten Sekundärleistung P_soll liegt. Dann wird die Spannung U für die Induktionsspule 14 erhöht um die Primärleistung zu erhöhen. Dann wird gemessen, ob die sich daraus ergebende gemessene Sekundärleistung P_ist schon der gewünschten Sekundärleistung P_soll entspricht. Ist dies der Fall so ist bereits der stationäre bzw. dauerhafte Arbeitspunkt erreicht. Ist dies noch nicht der Fall so wird geprüft, ob die anliegende Spannung U einer maximal zulässigen Spannung U_max entspricht. Ist dies noch nicht der Fall so wird die Spannung U noch einmal erhöht mit dem Durchlauf wie zuvor erläutert. Sobald die maximal zulässige Spannung U_max erreicht worden ist, aber noch nicht die gewünschte Sekundärleistung P_soll, wird die Arbeitsfrequenz f reduziert.

Kann durch ein erstes Reduzieren der Arbeitsfrequenz f erreicht werden, dass die gemessene Sekundärleistung P_ist der gewünschten Sekundärleistung P_soll entspricht, so ist wiederum der vorgenannte stationäre Arbeitspunkt erreicht. Falls dies noch nicht der Fall ist wird die Arbeitsfrequenz so lange reduziert, bis die gewünschte Bedingung erreicht ist.

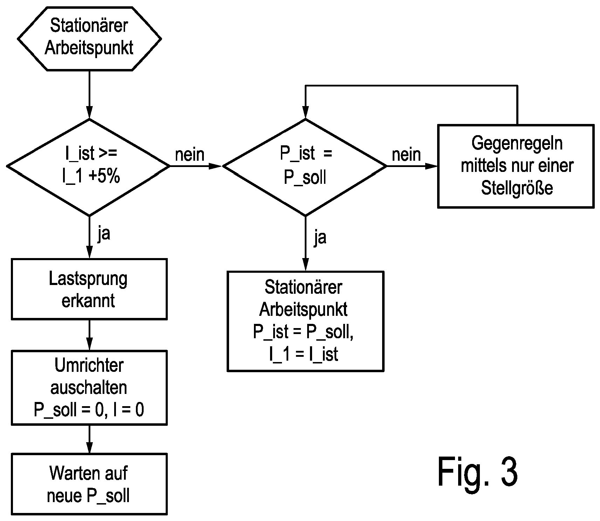

Im Flussdiagramm der Fig. 3 wird dargestellt, wie der stationäre Arbeitspunkt unter Beachtung der vorbeschriebenen dynamischen Strombegrenzung eingestellt bzw. ausgeregelt wird. Ausgehend von einem stationären Arbeitspunkt wie dem zuvor beschriebenen wird nun der tatsächliche Strom I_ist in der Induktionsspule 14 auf einmal größer. Wird er um weniger als 5% größer als der zuvor fließende Strom I_1, oder ändert er sich auch gar nicht, so wird überprüft ob die gemessene Sekundärleistung P_ist noch der gewünschten Sekundärleistung P_soll entspricht. Möglicherweise hat sich ja die gewünschte Leistung für den Verbraucher 30 aufgrund von kleinen Änderungen von elektrischen Parametern, beispielsweise durch Temperatureffekte, geändert. Entspricht die gemessene Sekundärleistung P_ist noch der gewünschten Sekundärleistung P_soll so bleibt der Arbeitspunkt der gleiche wie zuvor.

Entspricht die gemessene Sekundärleistung P_ist aber nicht mehr der gewünschten Sekundärleistung P_soll so wird mittels nur einer einzigen Stellgröße dagegengeregelt, und zwar so lange, bis die gemessene Sekundärleistung P_ist wieder der gewünschten Sekundärleistung P_soll entspricht. Dann ist wieder der Arbeitspunkt gegeben.

Beträgt nun aber der tatsächliche Strom I_ist in der Induktionsspule 14 mindestens 5% mehr als der zuvor fließende Strom I_1, dann wird von einem Lastsprung im Verbraucher 30 ausgegangen, beispielsweise weil eine Bedienperson für den Betrieb des Mixers nun eine andere Leistungsstufe bzw. Betriebsstufe gewählt hat, und möglicherweise ist eine Information dazu aber nicht an die Steuerung 23 gelangt. Dann wird der Umrichter bzw. die Leistungserzeugung 16 sofort ausgeschaltet um den Strom schnellstmöglich abzuschalten, damit dem Verbraucher keine zusätzliche Energie mehr zugeführt wird. Danach wird auf die Vorgabe einer neuen gewünschten Sekundärleistung P_soll gewartet. Damit kann dann, wenn sie empfangen worden ist, gemäß Fig. 2 der Arbeitspunkt angesteuert werden.

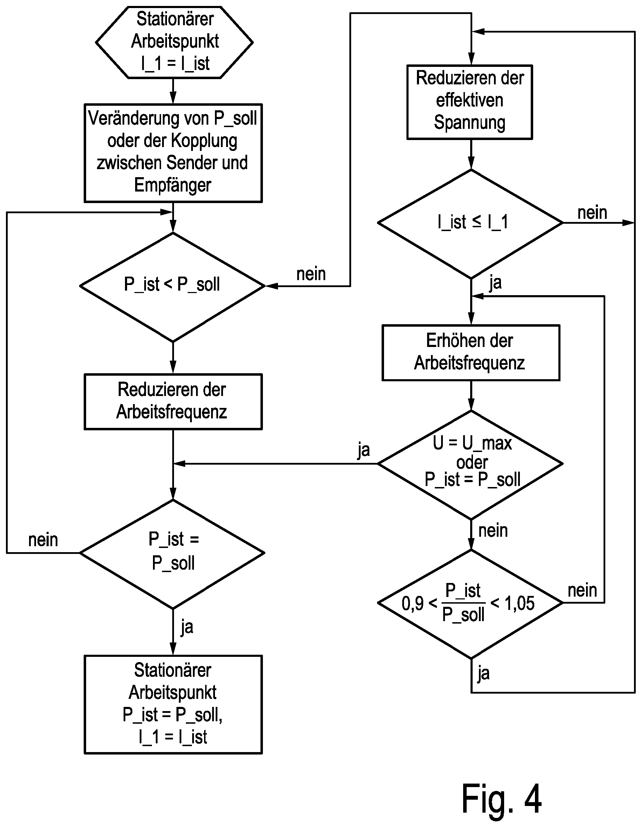

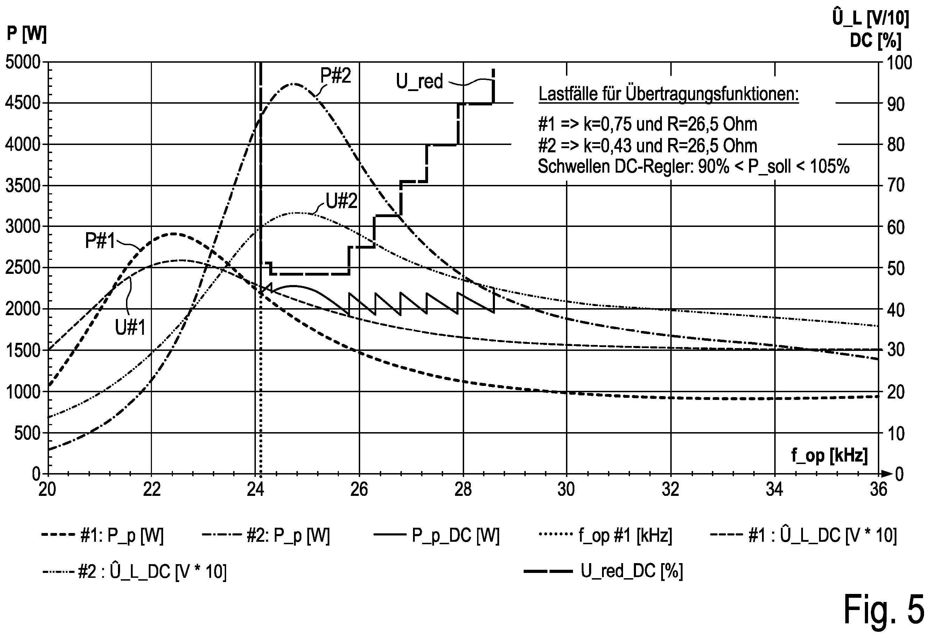

In Fig. 4 ist im Zusammenhang mit Fig. 5 dargestellt wie ein Übergang von einem bisherigen Arbeitspunkt in einen neuen Arbeitspunkt erfolgt. Es liegt ein gemäß Fig. 2 eingestellter stationärer Arbeitspunkt vor mit einem Strom I_ist durch die Induktionsspule 14, der einem bestehenden Strom I_1 entspricht. Die Leistung P_p #1 beträgt 2200 W, der Kopplungsfaktor k beträgt 0,75. Das soll hier einer relativ guten Kopplung zwischen Induktionsspule 14 und Verbraucher 30 bzw. Empfängerspule 39 entsprechen, vorteilhaft als konzentrische Anordnung. Dann kann sich entweder die Leistungsanforderung der gewünschten Sekundärleistung ändern, beispielsweise stark, oder die transformatorische Kopplung ändert sich wie vorbeschrieben wegen Verschieben des Verbrauchers 30 relativ zur Induktionsspule 14, beispielsweise um 3 cm bis 5 cm.

Es wird zuerst geprüft, ob die gemessene primäre Leistung P_ist geringer ist als die gewünschte Leistung P_soll, die der gewünschten Sekundärleistung entspricht, also ob die Leistung am Verbraucher 30 höher werden soll beispielsweise weil die gewünschte Leistung dort von einer Bedienperson erhöht wurde. Ist dies der Fall so wird die Arbeitsfrequenz der Leistungserzeugung 16 für die Induktionsspule 14 reduziert. Anhand der Fig. 5 kann man erkennen, wie dadurch die Primärleistung P auf der Kurve P #1 ansteigt, weil sich der Arbeitspunkt nach links verschiebt auf der Übertragungsfunktion P(f). Dies wird solange geprüft und die Arbeitsfrequenz reduziert bis die gemessene Sekundärleistung P_ist der gewünschten Leistung P_soll entspricht. Dann ist wiederum ein stationärer Arbeitspunkt gefunden mit ebendieser Leistung, wobei der tatsächlich gemessene Strom I_ist durch die Induktionsspule 14 fließt und darin eine entsprechende Primärleistung bewirkt.

Ist die gemessene Sekundärleistung P_ist nicht geringer ist als die gewünschte Leistung P_soll, sondern wohl größer, so beginnt das Suchen nach einem neuen Arbeitspunkt, aber entsprechend der gezackten Kurve in Fig. 5. Zuerst wird die effektive Spannung an der Induktionsspule 14 solange reduziert, bis der Strom I_ist durch die Induktionsspule 14 höchstens so groß wie der zuvor geflossene Strom I_1 ist oder anteilig einer Soll-Leistungsreduzierung sogar kleiner ist. Dann wird die effektive Spannung in der Leistungserzeugung 16, die an der Induktionsspule 14 anliegt, noch einmal reduziert. Es soll ja die tatsächliche Leistung P_soll reduziert werden, man will also auf der Übertragungsfunktion P(f) der Fig. 5 nach rechts. Durch das Reduzieren der Spannung ändert sich die Leistung bei gleichbleibender Arbeitsfrequenz, sie wird geringer.

Ist der Strom I_ist durch die Induktionsspule 14 kleiner als oder gleich wie der zuvor geflossene Strom I_1 so wird die Arbeitsfrequenz f wie eingangs erläutert erhöht, beispielsweise zwischen 0,2 kHz und 1 kHz bzw. 2 kHz. Wird eine maximale Spannung U_max erreicht oder entspricht die gemessene Leistung P_ist der gewünschten Leistung P_soll so geht es in dem Flussdiagramm nach links und man hat den zuvor erläuterten neuen stationären Arbeitspunkt. Ist diese Bedingung noch nicht erfüllt so wird überprüft, ob ein Verhältnis von gemessener Sekundärleistung P_ist zu gewünschter Leistung P_soll in einer bestimmten Bandbreite liegt, hier angegeben mit +5 %/ -10 %. Ist dies nicht der Fall so liegt eine starke Änderung vor und es muss wieder der zuvor erläuterte Schritt des Erhöhens der Arbeitsfrequenz durchgeführt werden.

Ist die Bedingung dagegen erfüllt so geht es in der Schleife wieder ganz nach oben zum Reduzieren der effektiven Spannung. Dadurch ergibt sich in diesem Fall die Zick-Zack-Linie von links nach rechts. War ursprünglich eine Leistung P_soll von 2.200 W gewünscht zum Betrieb des Verbrauchers 30 mit einer Arbeitsfrequenz von etwa 24,2 kHz, so liegt der neue Arbeitspunkt mit dieser Sekundärleistung bei einer Arbeitsfrequenz von etwa 28,6 kHz.

Gem. Fig. 5 wird durch ein Verschieben die transformatorische Kopplung schlechter, der Kopplungsfaktor k beträgt nur noch 0,43. Die Übertragungsfunktion wechselt nun von derjenigen von P #1 auf diejenige P #2, ist also deutlich anders mit bei anderer und etwas höherer Arbeitsfrequenz liegendem lokalen Höhepunkt. Im ersten Moment würden bei gleich bleibender Arbeitsfrequenz f Strom und Primärleistung an der Induktionsspule 14 stark ansteigen um noch die gewünschte Leistung erzeugen zu können, was in der Leistungserzeugung unterbunden wird, da ansonsten ein Schaden auftreten könnte, wie zuvor beschrieben. Die Spannung wird stark abgesenkt bis Strom und Leistung wieder die vorherigen Werte annehmen und eigentlich die gewünschte Leistung anliegen würde gemäß der vorherigen Übertragungsfunktion P #1, und dann wird die Arbeitsfrequenz etwas erhöht, beispielsweise um 0,2 kHz, wodurch zuerst die Primärleistung wieder ansteigt, da man jetzt auf dem linken bzw. kapazitiven Ast der neuen Übertragungsfunktion P #2 arbeitet. Die Erhöhung der Arbeitsfrequenz dient vor allem der verbesserten Effizienz. Während der zweiten Erhöhung der Arbeitsfrequenz wird der lokale Höhepunkt durchlaufen und es wird in den rechten induktiven Bereich gewechselt. Nun bewirkt deswegen ein Erhöhen der Arbeitsfrequenz einen Abfall der Primärleistung und somit der gemessenen Leistung. Der genannte ZickZack-Verlauf wird also so häufig durchgeführt bis jeweils nach einer Erhöhung der Spannung, was lang-strichliert dargestellt ist, nach Erhöhung der Arbeitsfrequenz f_op diejenige Primärleistung P erzeugt wird, bei der die gewünschte Leistung P_soll von 2.200 W am Verbraucher 30 vorliegt. Entsprechend der Übertragungsfunktion P #2 ist dies der Fall bei der bestimmten Primärleistung bei einer Arbeitsfrequenz von etwa 28,6 kHz.

Ähnlich wären Vorgehen und Verläufe auch dann, wenn sich anstelle der transformatorischen Kopplung durch Verschieben die gewünschte Sekundärleistung am Verbraucher ändert, beispielsweise weil eine Bedienperson eine andere Leistungsstufe für den Mixer einstellt.

## Patentansprüche

1. Verfahren zur Ansteuerung einer Induktionsspule (14) zur Einstellung einer Leistungserzeugung (16) für eine Primärleistung an der Induktionsspule (14), wobei:
- die Induktionsspule (14) zur Leistungsübertragung an einen auf eine Abdeckung (12) oberhalb der Induktionsspule aufgestellten elektrischen Verbraucher (30) ausgebildet ist, der eine Empfängerspule (39) und eine daran angeschlossene elektrische Last (35) aufweist,
- Ansteuermittel für die Leistungserzeugung (16) vorgesehen sind,
- die Induktionsspule (14) mit einer in Serie geschalteten Kapazität (18) einen primärseitigen Schwingkreis bildet,
- die Induktionsspule (14) und die Empfängerspule (39) transformatorisch gekoppelt sind derart, dass ein Strom in der Induktionsspule eine Spannung in der Empfängerspule induziert, die einen Stromfluss und somit eine Erzeugung der Sekundärleistung in der Last (35) des elektrischen Verbrauchers (30) bewirkt,
- den Ansteuermitteln der Induktionsspule (14) eine Information zu einer gewünschten Sekundärleistung an der Last (35) des Verbrauchers (30) vorgegeben wird,
- die Ansteuermittel der Induktionsspule (14) mindestens zwei Stellgrößen aufweisen, über die sie die erzeugte Primärleistung verändern, nämlich das Verändern einer Arbeitsfrequenz (f) für den primärseitigen Schwingkreis als eine erste Stellgröße sowie das Verändern einer am primärseitigen Schwingkreis effektiv anliegenden Spannung (U) als eine zweite Stellgröße,
- die Ansteuermittel der Induktionsspule (14) mit einer Übertragungsfunktion (P(f)) für die Primärleistung arbeiten, die zumindest einen lokalen Höhepunkt hat und die zumindest lokal derart ist, dass ein Verringern der Arbeitsfrequenz (f) zu einer höheren Primärleistung führt und ein Erhöhen der Arbeitsfrequenz zu einer geringeren Primärleistung führt,
wobei
- die Ansteuermittel in einem ersten Betriebsmodus immer versuchen, die gewünschte Sekundärleistung mit maximaler Aussteuerung der am primärseitigen Schwingkreis effektiv anliegenden Spannung (U) als zweite Stellgröße stationär einzuregeln, in den folgenden Fällen:
∘ bei Änderung der gewünschten Sekundärleistung oder
∘ bei Abweichung zwischen einer gemessenen Sekundärleistung und der gewünschten Sekundärleistung verursacht durch eine Änderung der transformatorischen Kopplung zwischen Induktionsspule (14) und Empfängerspule (39) und/oder durch eine Änderung der elektrischen Last (35) hervorgerufen durch integrierte Schaltmittel (41) im Verbraucher (30),
**dadurch gekennzeichnet, dass**
- zum Erhöhen der Primärleistung die Ansteuermittel die Arbeitsfrequenz (f) als erste Stellgröße verringern,
- zum Verringern der Primärleistung in einem ersten Schritt die am primärseitigen Schwingkreis effektiv anliegende Spannung (U) als zweite Stellgröße verringert wird bevor in einem zweiten nachgelagerten Schritt die Arbeitsfrequenz (f) als erste Stellgröße erhöht wird.

2. Verfahren nach Anspruch 1, **dadurch gekennzeichnet, dass**:
- in dem Fall, dass der Verbraucher (30) verschoben wird und dadurch in kurzer Zeit die transformatorische Kopplung geringer und der primärseitige Schwingkreis entdämpft werden, die Ansteuermittel in einem ersten Schritt bei gleichbleibender Arbeitsfrequenz (f) den primärseitigen Strom mit einer Schwankungsbreite von +-5 % in etwa konstant halten auf einem Ausgangsniveau des primärseitigen Stroms (I_1) vor Verschieben des Verbrauchers (30), wobei hierfür die am primärseitigen Schwingkreis effektiv anliegende Spannung (U) als zweite Stellgröße reduziert wird, wobei dabei eine Sekundärleistung erzeugt wird, die geringer ist als die gewünschte Sekundärleistung,
- dann in einem zweiten Schritt die Arbeitsfrequenz (f) als erste Stellgröße so lange erhöht wird, bis sich der Strom in der Induktionsspule (14) um maximal +-10 % verändert hat oder die Primärleistung um maximal +-10 % von dem Wert für die Primärleistung abweicht, bei der die Sekundärleistung der gewünschten Sekundärleistung entspricht,
- anschließend wird wieder die am primärseitigen Schwingkreis effektiv anliegende Spannung (U) als zweite Stellgröße so verändert, dass der primärseitige Strom (I_1) wieder sein Ausgangsniveau vor Verschieben des Verbrauchers (30) erreicht hat oder sich die gewünschte Sekundärleistung eingestellt hat,
- dann der erste vorgenannte Schritt und der zweite vorgenannte Schritt so lange abwechselnd durchgeführt werden, bis die gemessene Sekundärleistung kleiner oder gleich der gewünschten Sekundärleistung ist oder bis die maximal mögliche am primärseitigen Schwingkreis effektiv anliegende Spannung (U) als zweite Stellgröße erreicht ist.

3. Verfahren nach Anspruch 1 oder 2, **dadurch gekennzeichnet, dass** im zweiten Schritt beim Erhöhen der Arbeitsfrequenz (f) als erste Stellgröße die Schwelle für eine Änderung des Stroms in der Induktionsspule (14) oder die Schwelle für eine Änderung der Primärleistung nach oben kleiner ist als nach unten.

4. Verfahren nach einem der vorhergehenden Ansprüche, **dadurch gekennzeichnet, dass** den Ansteuermitteln eine Information zu einer gewünschten Sekundärleistung an der Last (35) des Verbrauchers (30) vorgegeben wird, wobei der elektrische Verbraucher den Vorgabewert für die Leistungserzeugung (16) an die Leistungserzeugung sendet.

5. Verfahren nach einem der vorhergehenden Ansprüche, **dadurch gekennzeichnet, dass** die Leistungsübertragung auf Dauer bei maximal möglicher am primärseitigen Schwingkreis effektiv anliegender Spannung (U) als zweite Stellgröße erfolgt, wobei bei der sich einstellenden Arbeitsfrequenz (f) als erste Stellgröße eine Effektivspannung an der Induktionsspule (14) anliegt, die maximal groß ist.

6. Verfahren nach einem der vorhergehenden Ansprüche, **dadurch gekennzeichnet, dass** das Erhöhen der Arbeitsfrequenz (f) jeweils gestoppt wird, sobald eine sich dabei ergebende Änderung der Primärleistung eine Schwelle von +/-10 % erreicht.

7. Verfahren nach Anspruch 2, **dadurch gekennzeichnet, dass** ein dauerhafter Betrieb der Induktionsspule (14) zur Versorgung des elektrischen Verbrauchers (30) mit einer Arbeitsfrequenz (f) erfolgt, bei der die Kurve der Übertragungsfunktion P(f) eine negative erste Ableitung über der Arbeitsfrequenz aufweist.

8. Verfahren nach dem Oberbegriff des Anspruchs 1, **dadurch gekennzeichnet, dass** eine dynamische Begrenzung des Stroms durch die Induktionsspule (14) erfolgt, wobei eine Begrenzung bei +10 %, insbesondere +5 %, des aktuellen Stromwerts liegt, wobei diese Begrenzung für eine Dauer von maximal 1 sec nicht überschritten werden darf, und andernfalls die Leistungserzeugung (16) an der Induktionsspule (14) abgeschaltet wird oder der Strom reduziert wird auf einen Wert mindestens 50 % unterhalb des aktuellen Stromwerts, wobei zur Reduzierung des Stroms die am primärseitigen Schwingkreis effektiv anliegende Spannung (U) als zweite Stellgröße reduziert wird.

9. Verfahren nach Anspruch 8, **dadurch gekennzeichnet, dass** diese Begrenzung regelmäßig alle 8 msec bis 500 msec nachgeführt wird.

10. Verfahren nach Anspruch 8 oder 9, **dadurch gekennzeichnet, dass** der Strom durch die Induktionsspule (14) über Komparatoren gemessen wird, die direkt auf einen Treiber für Leistungshalbleiter als Ansteuermittel für die Induktionsspule einwirken.

11. Verfahren nach einem der Ansprüche 8 bis 10, **dadurch gekennzeichnet, dass** bei einer Leistungserzeugung (16) mit Halbbrücken-Schaltung für die Induktionsspule (14) eine Stromspitze als Strom gemessen wird, welche durch genau einen Leistungsschalter (19) der Halbbrücken-Schaltung erzeugt wird, wobei dieser Leistungsschalter die kürzere Ein-Dauer im Vergleich zu dem anderen Leistungsschalter besitzt.

12. Verfahren nach einem der vorhergehenden Ansprüche, **dadurch gekennzeichnet, dass** mehrere Induktionsspulen (14) in einem Induktionskochfeld (11) mit diesem Verfahren angesteuert werden, wobei eine Arbeitsfrequenz (f) zum Erhöhen der Primärleistung einer der Induktionsspulen nicht kontinuierlich reduziert wird, sondern in Schritten bzw. Stufen reduziert wird.

13. Kombination einer Induktionsspulenvorrichtung (11) mit einem elektrischen Verbraucher (30),
wobei die Induktionsspulenvorrichtung (11) mindestens eine Induktionsspule (14) aufweist, die zur Leistungsübertragung an den elektrischen Verbraucher (30) ausgebildet ist,
wobei der elektrische Verbraucher (30) eine Empfängerspule (39) und eine daran angeschlossene elektrische Last (35) aufweist,
wobei der elektrische Verbraucher (30) auf eine Abdeckung (12) oberhalb der Induktionsspule (14) aufgestellt ist,
wobei die Induktionsspulenvorrichtung (11):
- Ansteuermittel für eine Leistungserzeugung (16) einer Primärleistung an der Induktionsspule (14) aufweist,
- eine Kapazität (18) aufweist, die mit der Induktionsspule (14) in Serie geschaltet ist und einen primärseitigen Schwingkreis bildet,
wobei:
- die Induktionsspule (14) und die Empfängerspule (39) transformatorisch gekoppelt sind derart, dass ein Strom in der Induktionsspule eine Spannung in der Empfängerspule induziert, die einen Stromfluss und somit eine Erzeugung der Sekundärleistung in der Last (35) des elektrischen Verbrauchers (30) bewirkt,
**dadurch gekennzeichnet, dass**:
- die Induktionsspulenvorrichtung (11) eine Steuerung (23) aufweist, die zur Durchführung des Verfahrens nach einem der vorhergehenden Ansprüche ausgebildet ist,
- die Ansteuermittel der Induktionsspule (14) mindestens zwei Stellgrößen aufweisen um damit die erzeugte Primärleistung verändern, nämlich das Verändern einer Arbeitsfrequenz (f) für den primärseitigen Schwingkreis als eine erste Stellgröße sowie das Verändern einer am primärseitigen Schwingkreis effektiv anliegenden Spannung (U) als eine zweite Stellgröße,
- die Ansteuermittel der Induktionsspule (14) so ausgebildet sind, dass sie mit einer Übertragungsfunktion (P(f)) für die Primärleistung arbeiten, die zumindest einen lokalen Höhepunkt hat und die zumindest lokal derart ist, dass ein Verringern der Arbeitsfrequenz (f) zu einer höheren Primärleistung führt und ein Erhöhen der Arbeitsfrequenz zu einer geringeren Primärleistung führt.

14. Kombination einer Induktionsspulenvorrichtung (11) mit einem elektrischen Verbraucher (30) nach Anspruch 13, **dadurch gekennzeichnet, dass** eine Arbeitsfrequenz (f) verwendet wird, die über derjenigen Arbeitsfrequenz liegt, bei der die Übertragungsfunktion (P(f)) ihren lokalen Höhepunkt hat.

## Claims

1. Method for controlling an induction coil (14) for adjusting power generation (16) for a primary power at the induction coil (14), wherein:
- the induction coil (14) is designed for power transmission to an electrical consumer (30) placed on a cover (12) above the induction coil, which has a receiver coil (39) and an electrical load (35) connected to it,
- control means are provided for the power generation (16),
- the induction coil (14) forms a primary-side resonant circuit with a capacitance (18) connected in series,
- the induction coil (14) and the receiver coil (39) are coupled in a transformer-like manner such that a current in the induction coil induces a voltage in the receiver coil, which causes a current to flow and thus generates a secondary power in the load (35) of the electrical consumer (30),
- the control means of the induction coil (14) are provided with information about a desired secondary power at the load (35) of the consumer (30),
- the control means of the induction coil (14) have at least two control variables via which they change the generated primary power, namely changing a working frequency (f) for the primary-side resonant circuit as a first control variable and changing a voltage (U) effectively applied to the primary-side resonant circuit as a second control variable,
- the control means of the induction coil (14) operate with a transfer function (P(f)) for the primary power, which has at least one local peak and which, at least locally, is such that a reduction in the operating frequency (f) leads to a higher primary power and an increase in the operating frequency leads to a lower primary power,
wherein
- in a first operating mode, the control means always attempt to regulate the desired secondary power in a steady state with maximum modulation of the voltage (U) effectively applied to the primary-side oscillating circuit as the second control variable in the following cases:
∘ when the desired secondary power changes, or
∘ in the event of a deviation between a measured secondary power and the desired secondary power caused by a change in the transformer coupling between the induction coil (14) and the receiver coil (39) and/or by a change in the electrical load (35) caused by integrated switching means (41) in the consumer (30),
**characterized in that**
- to increase the primary power, the control means reduce the operating frequency (f) as the first control variable,
- to reduce the primary power, in a first step, the voltage (U) effectively applied to the primary-side oscillating circuit is reduced as a second control variable before, in a second following step, the operating frequency (f) is increased as the first control variable.

2. Method according to claim 1, **characterized in that**:
- in the event that the consumer (30) is shifted and, as a result, the transformer coupling is reduced and the primary-side resonant circuit is damped in a short period of time, the control means, in a first step, keep the primary-side current at an output level of the primary-side current (I_1) before shifting the consumer (30) at a constant operating frequency (f) with a fluctuation range of + -5% at an output level of the primary-side current (I_1) before the load (30) is shifted, whereby the voltage (U) effectively applied to the primary-side oscillating circuit is reduced as a second control variable, thereby generating a secondary power that is lower than the desired secondary power,
- then, in a second step, the operating frequency (f) is increased as the first control variable until the current in the induction coil (14) has changed by a maximum of +-10% or the primary power deviates by a maximum of + -10% from the value for the primary power at which the secondary power corresponds to the desired secondary power,
- then the voltage (U) effectively applied to the primary-side oscillating circuit is changed again as the second control variable in such a way that the primary-side current (I_1) has returned to its initial level before the consumer (30) was moved or the desired secondary power has been set,
- then the first aforementioned step and the second aforementioned step are performed alternately until the measured secondary power is less than or equal to the desired secondary power or until the maximum possible voltage (U) effectively applied to the primary-side oscillating circuit is reached as the second control variable.

3. Method according to claim 1 or 2, **characterized in that**, in the second step, when increasing the operating frequency (f), the threshold for a change in the current in the induction coil (14) or the threshold for a change in the primary power is smaller upwards than downwards as the first control variable.

4. Method according to one of the preceding claims, **characterized in that** the control means are provided with information on a desired secondary power at the load (35) of the consumer (30), wherein the electrical consumer sends the specified value for power generation (16) to the power generation.

5. Method according to one of the preceding claims, **characterized in that** the power transmission is permanently carried out at the maximum possible effective voltage (U) applied to the primary-side oscillating circuit as a second control variable, wherein at the operating frequency (f) that sets in, an effective voltage that is maximally large is applied to the induction coil (14) as the first control variable.

6. Method according to one of the preceding claims, **characterized in that** the increase in the operating frequency (f) is stopped as soon as a resulting change in the primary power reaches a threshold of +/-10%.

7. Method according to claim 2, **characterized in that** continuous operation of the induction coil (14) for supplying the electrical consumer (30) takes place at a working frequency (f) at which the curve of the transfer function P(f) has a negative first derivative over the working frequency.

8. Method according to the preamble of claim 1, **characterized in that** a dynamic limitation of the current is performed by the induction coil (14), wherein a limitation is at +10%, in particular +5%, of the current value, wherein this limitation must not be exceeded for a duration of more than 1 second, and otherwise the power generation (16) at the induction coil (14) is switched off or the current is reduced to a value at least 50% below the current value, wherein, in order to reduce the current, the voltage (U) effectively applied to the primary-side oscillating circuit is reduced as a second control variable.

9. Method according to claim 8, **characterized in that** this limitation is regularly updated every 8 ms to 500 ms.

10. Method according to claim 8 or 9, **characterized in that** the current through the induction coil (14) is measured by comparators which act directly on a driver for power semiconductors as a control means for the induction coil.

11. Method according to one of claims 8 to 10, **characterized in that**, in the case of power generation (16) with a half-bridge circuit for the induction coil (14), a current peak is measured as current, which is generated by exactly one power switch (19) of the half-bridge circuit, wherein this power switch has the shorter on-time in comparison to the other power switch.

12. Method according to one of the preceding claims, **characterized in that** several induction coils (14) in an induction hob (11) are controlled using this method, whereby a working frequency (f) for increasing the primary power of one of the induction coils is not reduced continuously, but is reduced in steps or stages.

13. Combination of an induction coil device (11) with an electrical consumer (30),
wherein the induction coil device (11) has at least one induction coil (14) which is designed for power transmission to the electrical consumer (30),
wherein the electrical consumer (30) has a receiver coil (39) and an electrical load (35) connected thereto,
wherein the electrical consumer (30) is placed on a cover (12) above the induction coil (14),
wherein the induction coil device (11) comprises:
- control means for power generation (16) for the primary power at the induction coil (14),
- a capacitance (18) connected in series with the induction coil (14) and forming a primary-side resonant circuit,
wherein:
- the induction coil (14) and the receiver coil (39) are coupled in a transformer manner such that a current in the induction coil induces a voltage in the receiver coil, which causes a current to flow and thus generates the secondary power in the load (35) of the electrical consumer (30),
**characterized in that**:
- the induction coil device (11) has a control (23) which is designed to carry out the method according to one of the preceding claims,
- the control means of the induction coil (14) have at least two control variables for changing the generated primary power, namely changing a working frequency (f) for the primary-side resonant circuit as a first control variable and changing a voltage (U) effectively applied to the primary-side resonant circuit as a second control variable,
- the control means of the induction coil (14) are designed to operate with a transfer function (P(f)) for the primary power, which has at least one local peak and which is at least locally such that a reduction in the operating frequency (f) leads to a higher primary power and an increase in the operating frequency leads to a lower primary power.

14. Combination of an induction coil device (11) with an electrical consumer (30) according to claim 13, **characterized in that** an operating frequency (f) is used which is above the operating frequency at which the transfer function (P(f)) has its local peak.

## Revendications

1. Procédé de commande d'une bobine d'induction (14) pour régler une production d'énergie (16) pour une puissance primaire au niveau de la bobine d'induction (14), dans lequel :
- la bobine d'induction (14) est conçue pour transmettre la puissance à un consommateur électrique (30) placé sur un couvercle (12) au-dessus de la bobine d'induction, lequel consommateur électrique comprend une bobine réceptrice (39) et une charge électrique (35) qui y est raccordée,
- des moyens de commande sont prévus pour la production d'énergie (16),
- la bobine d'induction (14) forme avec une capacité (18) montée en série un circuit oscillant côté primaire,
- la bobine d'induction (14) et la bobine réceptrice (39) sont couplées par transformation de telle sorte qu'un courant dans la bobine d'induction induit une tension dans la bobine réceptrice, qui provoque un flux de courant et donc une production de puissance secondaire dans la charge (35) du consommateur électrique (30),
- une information relative à une puissance secondaire souhaitée au niveau de la charge (35) du consommateur (30) est fournie aux moyens de commande de la bobine d'induction (14),
- les moyens de commande de la bobine d'induction (14) comportent au moins deux grandeurs de réglage par lesquelles ils modifient la puissance primaire générée, à savoir la modification d'une fréquence de travail (f) pour le circuit oscillant côté primaire comme première grandeur de réglage et la modification d'une tension (U) effectivement appliquée au circuit oscillant côté primaire comme deuxième grandeur de réglage,
- les moyens de commande de la bobine d'induction (14) fonctionnent avec une fonction de transfert (P(f)) pour la puissance primaire, qui présente au moins un pic local et qui est, au moins localement, telle qu'une diminution de la fréquence de travail (f) entraîne une augmentation de la puissance primaire et qu'une augmentation de la fréquence de travail entraîne une diminution de la puissance primaire,
étant donné que
- les moyens de commande, dans un premier mode de fonctionnement, tentent toujours de réguler de manière stationnaire la puissance secondaire souhaitée avec une modulation maximale de la tension (U) effectivement appliquée au circuit oscillant côté primaire en tant que deuxième grandeur de réglage, dans les cas suivants :
∘ en cas de modification de la puissance secondaire souhaitée ou
∘ en cas d'écart entre une puissance secondaire mesurée et la puissance secondaire souhaitée, causé par une modification du couplage transformateur entre la bobine d'induction (14) et la bobine réceptrice (39) et/ou par une modification de la charge électrique (35) provoquée par des moyens de commutation intégrés (41) dans le consommateur (30),
**caractérisé en ce que**
- pour augmenter la puissance primaire, les moyens de commande réduisent la fréquence de travail (f) en tant que première grandeur de réglage,
- pour réduire la puissance primaire, dans une première étape, la tension (U) effectivement appliquée au circuit oscillant côté primaire est réduite en tant que deuxième variable de réglage avant que, dans une deuxième étape en aval, la fréquence de travail (f) ne soit augmentée en tant que première variable de réglage.

2. Procédé selon la revendication 1, **caractérisé en ce que** :
- dans le cas où le consommateur (30) est déplacé et où, de ce fait, le couplage transformateur diminue rapidement et le circuit oscillant côté primaire est amorti, les moyens de commande maintiennent dans une première étape, à fréquence de travail (f) constante, le courant côté primaire à un niveau de sortie du courant côté primaire (I_1) à peu près constant, avec une marge de fluctuation de + -5 % à un niveau de sortie du courant côté primaire (I_1) avant le déplacement du consommateur (30), la tension (U) effectivement appliquée au circuit oscillant côté primaire étant réduite à cet effet en tant que deuxième grandeur de réglage, ce qui génère une puissance secondaire inférieure à la puissance secondaire souhaitée,
- puis, dans une deuxième étape, la fréquence de travail (f) est augmentée en tant que première grandeur de réglage jusqu'à ce que le courant dans la bobine d'induction (14) ait varié de +-10 % au maximum ou que la puissance primaire s'écarte de + -10 % de la valeur de la puissance primaire pour laquelle la puissance secondaire correspond à la puissance secondaire souhaitée,
- ensuite, la tension (U) effectivement appliquée au circuit oscillant côté primaire est à nouveau modifiée en tant que deuxième grandeur de réglage de telle sorte que le courant côté primaire (I_1) ait à nouveau atteint son niveau initial avant le déplacement du consommateur (30) ou que la puissance secondaire souhaitée se soit stabilisée,
- ensuite, la première étape susmentionnée et la deuxième étape susmentionnée sont exécutées en alternance jusqu'à ce que la puissance secondaire mesurée soit inférieure ou égale à la puissance secondaire souhaitée ou jusqu'à ce que la tension maximale possible (U) effectivement appliquée au circuit oscillant côté primaire soit atteinte en tant que deuxième grandeur de réglage.

3. Procédé selon la revendication 1 ou 2, **caractérisé en ce que**, dans la deuxième étape, lors de l'augmentation de la fréquence de travail (f), le seuil pour une modification du courant dans la bobine d'induction (14) ou le seuil pour une modification de la puissance primaire est plus petit vers le haut que vers le bas en tant que première grandeur de réglage.

4. Procédé selon l'une des revendications précédentes, **caractérisé en ce qu'**une information relative à une puissance secondaire souhaitée au niveau de la charge (35) du consommateur (30) est fournie aux moyens de commande, le consommateur électrique envoyant la valeur de consigne pour la production d'énergie (16) à la production d'énergie.

5. Procédé selon l'une des revendications précédentes, **caractérisé en ce que** le transfert de puissance s'effectue en permanence à la tension effective maximale possible (U) appliquée au circuit oscillant côté primaire en tant que deuxième grandeur de réglage, une tension effective maximale étant appliquée à la bobine d'induction (14) en tant que première grandeur de réglage à la fréquence de travail (f) qui s'établit.

6. Procédé selon l'une des revendications précédentes, **caractérisé en ce que** l'augmentation de la fréquence de travail (f) est arrêtée dès qu'une modification de la puissance primaire qui en résulte atteint un seuil de +/-10 %.

7. Procédé selon la revendication 2, **caractérisé en ce que** la bobine d'induction (14) fonctionne en continu pour alimenter le consommateur électrique (30) à une fréquence de travail (f) pour laquelle la courbe de la fonction de transfert P(f) présente une dérivée première négative sur la fréquence de travail.

8. Procédé selon le préambule de la revendication 1, **caractérisé en ce qu'**une limitation dynamique du courant est effectuée par la bobine d'induction (14), une limitation étant fixée à +10 %, en particulier +5 %, de la valeur actuelle du courant, cette limitation ne pouvant être dépassée pendant une durée maximale de 1 seconde, et sinon, la production d'énergie (16) au niveau de la bobine d'induction (14) est coupée ou le courant est réduit à une valeur inférieure d'au moins 50 % à la valeur actuelle du courant, la tension (U) effectivement appliquée au circuit oscillant côté primaire étant réduite en tant que deuxième grandeur de réglage afin de réduire le courant.

9. Procédé selon la revendication 8, **caractérisé en ce que** cette limitation est régulièrement ajustée toutes les 8 ms à 500 ms.

10. Procédé selon la revendication 8 ou 9, **caractérisé en ce que** le courant traversant la bobine d'induction (14) est mesuré par des comparateurs qui agissent directement sur un circuit d'attaque pour semi-conducteurs de puissance servant de moyen de commande pour la bobine d'induction.

11. Procédé selon l'une des revendications 8 à 10, **caractérisé en ce que**, dans le cas d'une production d'énergie (16) avec un circuit en demi-pont pour la bobine d'induction (14), un pic de courant est mesuré comme courant, lequel est généré par exactement un commutateur de puissance (19) du circuit en demi-pont, ce commutateur de puissance ayant la durée d'enclenchement la plus courte par rapport à l'autre commutateur de puissance.

12. Procédé selon l'une des revendications précédentes, **caractérisé en ce que** plusieurs bobines d'induction (14) dans une plaque de cuisson à induction (11) sont commandées selon ce procédé, une fréquence de travail (f) pour augmenter la puissance primaire de l'une des bobines d'induction n'étant pas réduite de manière continue, mais par paliers ou par étapes.

13. Combinaison d'un dispositif à bobines d'induction (11) avec un consommateur électrique (30),
le dispositif à bobines d'induction (11) comportant au moins une bobine d'induction (14) qui est conçue pour transmettre la puissance au consommateur électrique (30),
le consommateur électrique (30) comprend une bobine réceptrice (39) et une charge électrique (35) qui y est raccordée,
le consommateur électrique (30) étant placé sur un couvercle (12) au-dessus de la bobine d'induction (14),
le dispositif à bobine d'induction (11) a:
- des moyens de commande pour une production de puissance (16) d'une puissance primaire au niveau de la bobine d'induction (14),
- une capacité (18) qui est connectée en série avec la bobine d'induction (14) et forme un circuit oscillant côté primaire,
dans lequel :
- la bobine d'induction (14) et la bobine réceptrice (39) sont couplées par transformation de telle sorte qu'un courant dans la bobine d'induction induit une tension dans la bobine réceptrice, qui provoque un flux de courant et donc une génération de la puissance secondaire dans la charge (35) du consommateur électrique (30),
**caractérisé en ce que** :
- le dispositif à bobine d'induction (11) comprend une commande (23) qui est conçue pour mettre en œuvre le procédé selon l'une des revendications précédentes,
- les moyens de commande de la bobine d'induction (14) comportent au moins deux grandeurs de réglage afin de modifier la puissance primaire générée, à savoir la modification d'une fréquence de travail (f) pour le circuit oscillant côté primaire comme première grandeur de réglage et la modification d'une tension (U) effectivement appliquée au circuit oscillant côté primaire comme deuxième grandeur de réglage,
- les moyens de commande de la bobine d'induction (14) sont conçus de manière à fonctionner avec une fonction de transfert (P(f)) pour la puissance primaire, qui présente au moins un pic local et qui est au moins localement telle qu'une diminution de la fréquence de travail (f) entraîne une puissance primaire plus élevée et qu'une augmentation de la fréquence de travail entraîne une puissance primaire plus faible.

14. Combinaison d'un dispositif à bobine d'induction (11) avec un consommateur électrique (30) selon la revendication 13, **caractérisée en ce qu'**on utilise une fréquence de travail (f) qui est supérieure à la fréquence de travail à laquelle la fonction de transfert (P(f)) a son pic local.
